Europäisches Patentamt

(19) European Patent Office

Office européen des brevets

(11) Veröffentlichungsnummer: **0 045 376**
**B1**

(12) **EUROPÄISCHE PATENTSCHRIFT**

(45) Veröffentlichungstag der Patentschrift:
**12.03.86**

(51) Int. Cl.⁴: **E 04 D  11/00,** A 01 G  9/00

(21) Anmeldenummer: **81105045.9**

(22) Anmeldetag: **30.06.81**

(54) **Schrägdachabdeckung.**

(30) Priorität: **30.06.80  DE 3024672**

(43) Veröffentlichungstag der Anmeldung:
**10.02.82 Patentblatt 82/6**

(45) Bekanntmachung des Hinweises auf die Patenterteilung:
**12.03.86 Patentblatt 86/11**

(84) Benannte Vertragsstaaten:
**AT BE CH DE FR GB IT LI LU NL SE**

(56) Entgegenhaltungen:
**CA - A - 1 009 819**
**DE - A - 2 248 911**
**DE - A - 2 321 362**
**DE - A - 2 335 685**

(73) Patentinhaber: **Drefahl, Jens, Amselweg 18a,
D-6458 Rodenbach 2 (DE)**

(72) Erfinder: **Drefahl, Jens, Amselweg 18a,
D-6458 Rodenbach 2 (DE)**

(74) Vertreter: **Schumacher, Bernd, Dipl.-Ing., Am
Schwaberg 13, D-6450 Hanau 6 (DE)**

## Beschreibung

Die Erfindung betrifft eine Schrägdachabdeckung zum Begrünen eines mit einer Tragkonstruktion und einer wasserundurchlässigen Dachhaut als Kalt- oder Warmdach ausgebildeten Schrägdaches mit einer oberseitig aufzubringenden Schicht, wie einer Pflanzentragschicht, und mit einem von der Dachhaut unabhängigen, verrottungsfreien Haltegebilde, das in die aufzubringende Schicht reibungserhöhend sowie schubauffangend eingreifende oberseitige Haltevorsprünge an einem zum Abtragen des auftretenden Schubes am Schrägdach gegen Abrutschen gesicherten Schubableitungsmittel aufweist und das über verteilte, eine unterseitige Dränage bestimmende Abstandshalter auf das Schrägdach aufzubringen ist.

Begrünte Schrägdächer haben gegenüber herkömmlichen Schrägdächern erhebliche Vorteile. Eine Schrägdachbegrünung führt zu einem erheblichen zusätzlichen Wärme- bzw. Kälteschutz und zu einem günstigeren Raumklima des damit ausgerüsteten Gebäudes, ferner zu einer Klimaverbesserung sowie optischen Verschönerung der Umgebung insbesondere bei verdichteten Stadtlandschaften, zu einer günstigeren Raumausnutzung und dergleichen mehr. Dachbegrünungen wurden bisher nur für Flachdächer und für sehr leicht geneigte Schrägdächer eingesetzt, da sich bei grösseren Dachneigungen bautechnische Probleme ergeben.

Die CA-A-1 009 819 beschreibt eine Schrägdachabdeckung der im Oberbegriff genannten Art. Hierbei besteht das relativ schwere Haltegebilde aus aneinander angrenzenden Dachplatten, die im Bereich einzelner oder aller Abstandshalter über Befestigungsmittel am Dachunterbau unter Durchdringung desselben festgelegt sind. Traufseitig ist das Haltegebilde zusätzlich von einem fixierten Halteelement gegen Abrutschen gesichert. Das Oberflächenwasser kann nur durch die Zwischenräume zwischen angrenzenden Dachplatten in die Dränage eintreten, so dass keine grossflächige, hochwirksame Wasserableitung gewährleistet ist. Diese Schrägdachabdeckung lässt sich nicht ohne dachdurchdringende Verankerung im Schrägbereich einsetzen und führt wegen des grossen Gewichtes der gesamten Auflage zu einer erhöhten Belastung des Daches und der Dachhaut. Diese Dachabdeckung kann nur für relativ schwach geneigte Dächer und nur dann verwendet werden, wenn ein sehr stabiler Dachunterbau und ein regenarmes Gebiet vorliegen, da anderenfalls Dachdurchbiegungen und Oberflächenausspülungen unvermeidbar sind.

Die DE-A-2 321 362 beschreibt eine Erosionsschutzmatte mit einem unterseitigen Filtervlies und einer lockeren bodenhalternden Wirrfaserschicht. Diese Matte dient als Böschungsschutz und ist an verteilten Stellen des Schrägbereiches mit mechanischen Mitteln am Bodenuntergrund zu verankern, wobei im späteren Begrünungszustand eine weitere Bodenverankerung durch Pflanzenwurzeln erfolgt. Ähnliche Verhältnisse liegen auch bei einer Sportplatz-Dränagematte gemäss der DE-A-2 248 911 vor, die unterhalb der Filterschicht eine Dränageschicht und darunter eine weitere Filterschicht aufweist. Diese Matte dient als flächige Bodenentwässerung für Sportplätze und liegt ebenfalls grossflächig verankert auf dem rauhen Bodenuntergrund auf.

Die DE-A-2 335 685 beschreibt zur Grünverbauung auch von Schrägflächen einen dreidimensionalen Skelettkörper aus miteinander verbundenen Drähten. Zur Lagesicherung wird dieser Skelettkörper durch Felsanker oder Äste bzw. Stecklinge im Schrägbereich am Untergrund fest verankert. Der Skelettkörper hat keine Filterwirkung im Sinne der oben genannten Matten.

Die parallele EP-A-0 047 365 dieselbel Anmelders (und mit gleicher Priorität sowie mit gleichen benannten Vertragsstaaten), die sich bezüglich einiger Merkmale, insbesondere von Unteransprüchen, mit der vorliegenden Anmeldung überschneidet, befasst sich mit einer nur für Flachdächer dienenden wurzelverankernden Bodeneinlage.

Die Aufgabe der vorliegenden Erfindung besteht darin, eine Dachabdeckung der im Oberbegriff genannten Art mit möglichst einfachen, leichten sowie preiswerten Mitteln so auszubilden, dass sie ein sicheres Begrünen von Schrägdächern auch grösserer Neigung, beispielsweise von mehr als 30°, zulässt und ein schnelles bauseitiges Verlegen unter Vermeidung bau- und pflanztechnischer Probleme gewährleistet. Die Dachabdeckung soll auch ein nachträgliches Umrüsten von vorhandenen Schrägdächern ohne jegliche Gefahr einer Schädigung oder Veränderung derselben ermöglichen.

Die Erfindung geht von dem Gedanken aus, die Dachabdeckung so zu gestalten, dass die in Dachneigungsrichtung auftretenden Schubkräfte der Dachabdeckung selbst und der oberseitig aufzubringenden Schicht, wie Platten, Erdreich mit Pflanzen und dergleichen, unabhängig von der Dachhaut des eigentlichen Dachaufbaues abgefangen und über eine zugfeste Filtermatte in bezug auf die Dachhaut weitgehend reibungsfrei zum Dachfirst abgeleitet werden, wobei die Filtermatte eine grossflächige, gleichmässige Wasserableitung gewährleistet.

Zur Lösung der gestellten Aufgabe zeichnet sich eine Dachabdeckung der im Oberbegriff genannten Art erfindungsgemäss im einzelnen dadurch aus, dass das auf das Schrägdach verankerungsfrei lose sowie weitgehend spannungs- bzw. reibungsfrei aufzulegende Haltegebilde als Schubableitungsmittel eine den Schub über Zugkräfte abtragende und lediglich am Dachfirst festzulegende zugfeste Matte mit oberseitigen Haltevorsprüngen aufweist, die gleichzeitig als eine die Dränage oberseitig grossflächig begrenzende Filtermatte ausgebildet ist.

Eine derartige Dachabdeckung, die relativ preiswert sowie ausgesprochen zweckmässig ist und ein sehr leichtes Haltegebilde hat, ermöglicht auch bei grösseren Dachneigungen eine sichere Dachbegrünung von allseits gut sichtbaren Dachlandschaften. Da die Schubkräfte der Dachabdekkung, der hierauf aufzubringenden Schicht und der Dachbegrünung völlig unabhängig von der Dachhaut und unter weitgehender Reigungsfreiheit hierzu zum Firstbereich abgeleitet werden, besteht keinerlei Gefahr für eine Verletzung, eine besondere Beanspruchung oder ein Durchbrechen der Dachhaut. Wegen der grossflächigen Wasserableitung der Filtermatte kann das Oberflächenwasser auch bei grossem Wasseranfall und bei grösseren Dachneigungen an allen Stellen sicher nach unten abfliessen, ohne dass die Gefahr des Wegschwemmens oberseitiger Begrünungsbereiche besteht. Die Ausbildung der Filtermatte hat den weiteren Vorteil, dass durch Auf-und Abrollen derselben bzw. des gesamten Haltegebildes ein besonders einfaches Transportieren, Lagern und Aufbringen auf ein Schrägdach ermöglicht werden. Die Dachabdeckung erhöht, insbesondere auch in Verbindung mit der aufzubringenden Schicht, die Wärmedämmung, schützt vor witterungsbedingten Einflüssen, wie der UV-Strahlung, und führt zu einer drastischen Verbesserung des Wohnkomforts sowie des äusseren Erscheinungsbildes von einzelnen Gebäuden und verdichteten Stadtgebieten.

Für die Ausbildung, Anzahl und Verteilung der Haltevorsprünge gibt es vielfältige Möglichkeiten. Wichtig ist dabei, dass die aufzubringende Schicht, wie eine Pflanzentragschicht, sicher an einem Abrutschen gehindert wird, indem der auftretende Schub über das Schubableitungsmittel zur Firstseite abgeleitet wird.

Gemäss einer Ausführungsform sin die Haltevorsprünge als einzelne, direkt oder über Zwischenglieder mit der Filtermatte verbundene schubauffangende Glieder, wie Noppen, Stifte, Haken oder an sich bekannte Stege, Rippen, gewellte Elemente oder dergleichen, ausgebildet. Sofern derartige Haltevorsprünge in Dachneigungsrichtung versetzt angeordnet sind, ist es in Abhängigkeit von der Dachneigung und der Art der aufzubringenden Schicht nicht unbedingt erforderlich, über die Dachbreite durchgehend ver-laufende Haltevorsprünge vorzusehen. Eine ge-eignet versetzte Anordnung von Haltevorsprün-gen verhindert ein geradliniges Abrutschen von Bereichen der aufzubringenden Schicht, und ein wellenförmiges Abrutschen der Schicht wird bereits durch auftretende innere Reibungen weitgehend gehemmt. Je grösser die Dachneigung und die Fliessfähigkeit der aufzubringenden Schicht sind, desto grössere Anforderungen müssen an die Höhe der Haltevorsprünge in bezug auf die Dicke der aufzubringenden Schicht, an die Flächendichte und an die Formgebung der Haltevorsprünge gestellt werden. Bei einer kleinen Dachneigung, einer geringen Dicke der aufzubringenden Schicht und einer kleinen Fliessfähigkeit derselben können bereits relativ geringe Oberflächenrauhigkeiten zum Halten der Schicht ausreichen, wozu sich beispielsweise niedrige Noppen oder dergleichen eignen. Demnach können die Halterungseigenschaften der Haltevorsprünge und damit die Kosten für das Haltegebilde den jeweils vorliegenden Erfordernissen angepasst werden.

Eine besonders vorteilhafte Ausführungsform zeichnet sich dadurch aus, dass die Haltevorsprünge in ihrer Gesamtheit als ein zumindest bereichsweise mit dem Schubableitungsmittel verbundenes, dreidimensionales, schubauffangendes Gebilde aus miteinander verketteten Fasern oder Strängen mit zwischen diesen befindli-chen Zwischenräumen zum Aufnehmen wenig-stens des unteren Bereichs der aufzubringenden Schicht ausgebildet sind. Hierbei kann das dreidimensionale Gebilde aus Kunststoff-Monofilen bestehen. Ausserdem ist es möglich, für das schub-auffangende Gebilde ein dreidimensionales Ge-flecht oder Gewebe von Fasern oder Strängen oder aber eine unregelmässige Verkettung von Fasern oder Strängen vorzusehen. Ein derartiges dreidimensionales Gebilde ermöglicht ein grossflächiges, sicheres Halten der aufzubringenden Schicht auch bei grösseren Dachneigungen und ungünstigen Fliesseigenschaften der aufzufangenden Schicht, und zwar insbesondere dann, wenn die Dicke des dreidimensionalen Gebildes zumindest etwa der Dicke der aufzubringenden Schicht entspricht. Die einzelnen Fasern oder Stränge durchsetzen die Schicht wurzelartig mit einem in bezug auf die Stärke der Fasern oder Stränge relativ grossen gegenseitigen Abstand, so dass der Pflanzenwuchs, Feuchtigkeitsaustausch und Stoffaustausch in der Schicht praktisch ungehindert ist. Die verketteten Fasern oder Stränge können bezüglich ihrer Länge und Verlegung weitgehend beliebig gestaltet sein, wenn nur dafür gesorgt wird, dass sie ausreichend stabil und genügend fest verankert sind, um für ein krallen- bzw. wurzelähnliches Festhalten der aufzubringenden Schicht zu sorgen.

In weiterer Ausgestaltung kann eine die verketteten Fasern oder Stränge lagestabilisierende Armierung, wie ein Gitter, im Inneren und/oder an der Oberseite des schubauffangenden Gebildes vorgesehen sein. Ein derartiges Armierungsgitter, das beispielsweise ein Rastermass von etwa 10 cm × 10 cm haben kann, hindert nicht den Pflanzenwuchs und sorgt lediglich dafür, dass die vom Schubableitungsmittel entfernten Bereiche der verketteten Fasern oder Stränge ausreichend stabil gehalten werden. Eine derartige Armierung ist vor allem dann vorteilhaft, wenn relativ grosse Schichtdicken und Dachneigungen benutzt werden, da in diesem Fall besonders grosse Schubkräfte aufzufangen sind.

Ähnliche Verhältnisse liegen auch dann vor, wenn die Filtermatte aus mit den verketteten Fasern oder Strängen des dreidimensionalen schub-auffangenden Gebildes verbundenen, wie ver-flochtenen oder verklebten, zugfesten Zugsträn-gen besteht. Gegenüber einer durchgehenden bzw. geschlossenen Matte kann diese Ausführungsform den Vorteil einer weiteren Materialersparnis haben.

In weiterer Ausgestaltung sind Mittel zum ab-rutschsichernden Anschliessen des Schubablei-tungsmittels an der Firstseite des Schrägdaches vorgesehen. Diese Mittel können vielfältig gestaltet sein. Stattdessen oder zusätzlich ist es auch möglich, eine über beide Hälften eines Satteldachs durchgehend zu verlegende zugfeste Matte eines durch Gewichtsausgleich über First auf dem Schrägdach gehaltenen Schubableitungsmittels vorzusehen. Bei dieser Ausführungsform können grundsätzlich alle Verankerungen zwischen dem Haltegebilde und dem gesamten Schrägdach entfallen, da die Dachabdeckung allein durch ihr Eigengewicht sicher auf dem Schrägdach aufliegt.

Bei einer Ausführungsform sind die verteilten unterseitigen Abstandshalter direkt an der Filterschicht, also ohne weitere Zwischenlage, angeordnet. Hierdurch entsteht bei relativ geringer Gesamtdicke des Haltegebildes ein für den ungehinderten Dränvorgang ausreichender Zwischenraum unterhalb der Filterschicht.

Bei einer besonders bevorzugten Ausführungsform ist die zugfeste Filtermatte als Schubableitungsmittel mit ober- und unterseitigen, zumindest bereichsweise an die Filtermatte angeschlossenen, dreidimensionalen Gebilden aus miteinander verketteten Fasern oder Strängen mit zwischen diesen befindlichen Zwischenräumen ausgebildet, die oberseitig zum Aufnehmen der aufzubringenden Schicht und unterseitig zum Aufnehmen von abzuleitendem, gefiltertem Oberflächenwasser und/oder von Flutungswasser zum Bewässern von unten dienen. Dabei kann eine die Fasern oder Stränge lagestabilisierende Armierung, wie ein Gitter, oberhalb und/oder unterhalb der Filtermatte vorgesehen sein. Eine solche Filtermatte mit beidseitigen wurzelartigen Raumgebilden ist besonders vorteilhaft, da sie sämtliche Eigenschaften eines zweckmässigen Haltegebildes verbindet und sich wegen ausgezeichneter Aufrollfähigkeit äusserst gut handhaben lässt. Nach einem firstseitigen Anordnen der Haltegebilde-Rolle können die einzelnen Bahnen der Dachabdeckung unter Schwerkrafteinfluss abgerollt werden, und zwar bei einem Satteldach längs beider Satteldachhälften. Eine derartige Verlegung ist in kürzester Zeit möglich und erfordert lediglich ein firstseitiges Sichern des Haltegebildes gegen Abrutschen, beispielsweise durch einen über First erfolgenden Gewichtsausgleich der gegenüberliegenden Halteglied-Bereiche der beiden Satteldachhälften.

Vorzugsweise wird eine Dränage mit einer ausreichenden Rückstaubildung und/oder mit verteilt eingearbeiteten, von der Dränageunterseite zur Dränageoberseite führenden Wasserleitgebilden zum unterseitigen Bewässern der oberseitig aufzubringenden Schicht mittels firstseitig in die Dränage eingeleiteten Flutungswassers verwendet. Eine derartige Bewässerung hat gegenüber einer Oberflächenbewässerung den wesentlichen Vorteil, dass das Wasser direkt den aufsaugenden Pflanzenwurzeln zugeführt wird und nicht an der Oberfläche der Schicht verdunsten kann. Damit ist eine sparsame Bewässerung auch bei heissem, trockenem Klima gewährleistet.

In weiterer Ausgestaltung ist es bevorzugt, eine zugfeste Filtermatte mit feuchtigkeitsspeichernden Eigenschaften zu benutzen. Hierdurch kann trotz einer zeitweise unterbrochenen Bewässerung ein annähernd gleichbleibender Feuchtigkeitshaushalt in der aufzubringenden Schicht aufrechterhalten werden, wodurch der Pflanzenwuchs gefördert wird.

Ausserdem ist es möglich, unter dem Haltegebilde oberhalb der Dachhaut eine Wärmedämmschicht vorzusehen, wenn diese zur Erhöhung der Gesamtdämmung des Daches erwünscht ist. Ferner kann es zweckmässig sein, unter dem Haltegebilde und/oder einer Wärmedämmschicht oberhalb der Dachhaut eine Gleitschicht anzuordnen. Diese ermöglicht eine noch bessere Trennung bzw. Reibungsfreiheit zwischen der Dachabdeckung und der Dachhaut, was erforderlich ist, damit auf die Dachhaut keine schubbedingten Kräfte übertragen werden. Auf eine derartige Gleitschicht kann immer dann verzichtet werden, wenn die Unterseite des Haltegebildes selbst bereits ausreichend reibungsarm ausgebildet ist.

In weiterer Ausgestaltung kann ein Randabschluss des Haltegebildes vorgesehen sein, und dieser Randabschluss ist vorzugsweise als ein den Rand des Haltegebildes umfassendes U-Profil ausgebildet. Ein derartiger Randabschluss sorgt für eine saubere Begrenzung und für ein einwandfreies Einfassen der Teile des Haltegebildes, insbesondere von verketteten Fasern oder Strängen desselben.

Günstige Verhältnisse ergeben sich auch dann, wenn die Dränage unter dem Haltegebilde als Abstandshalter ein Wellelement aufweist, dessen Wellentäler in Dachneigungsrichtung oder schräg hierzu verlaufen. Das abzuführende oder zur Bewässerung von unten zuzuführende Wasser kann in den Wellentälern der Dränage fliessen. Wenn für die oberseitigen Haltevorsprünge und für die unterseitige Dränage Wellelemente eingesetzt werden, können diese winkelmässig in bezug aufeinander so verlagert sein, dass sich die Wellentäler des oberseitigen Wellelements bereichsweise auf den Wellenbergen des unterseitigen Wellelements abstützen. Stattdessen ist es auch möglich, die beiden Wellelemente unter gleicher Winkelausrichtung seitlich so gegeneinander zu verschieben, das die Wellentäler des oberseitigen, perforierten Wellelements über ihre gesamte Länge auf den Wellenbergen des unteren Wellelements aufliegen.

Die Erfindung wird nachfolgend an einigen wenigen, schematisch dargestellten Ausführungsbeispielen näher erläutert. Es zeigen:

Fig. 1 zwei Ausführungsformen einer Dachabdeckung nach der vorliegenden Erfindung in einem Teilschnitt in Dachneigungsrichtung,

Fig. 2 in einer Fig. 1 ähnelnden Ansicht eine weitere Ausführungsform einer Dachabdeckung mit oberseitigen Haltevorsprüngen in Form von dreidimensional verketteten Fäden oder Strängen,

Fig. 3 in einer Fig. 1 ähnelnden Ansicht eine gegenüber Fig. 2 abgewandelte Ausführungsform mit eine unterseitige Dränage bildenden, dreidimensional verketteten Fäden oder Strängen und

Fig. 4 einen Teil des Haltegebildes der Ausführungsformen aus den Fig. 2 und 3 in Draufsicht.

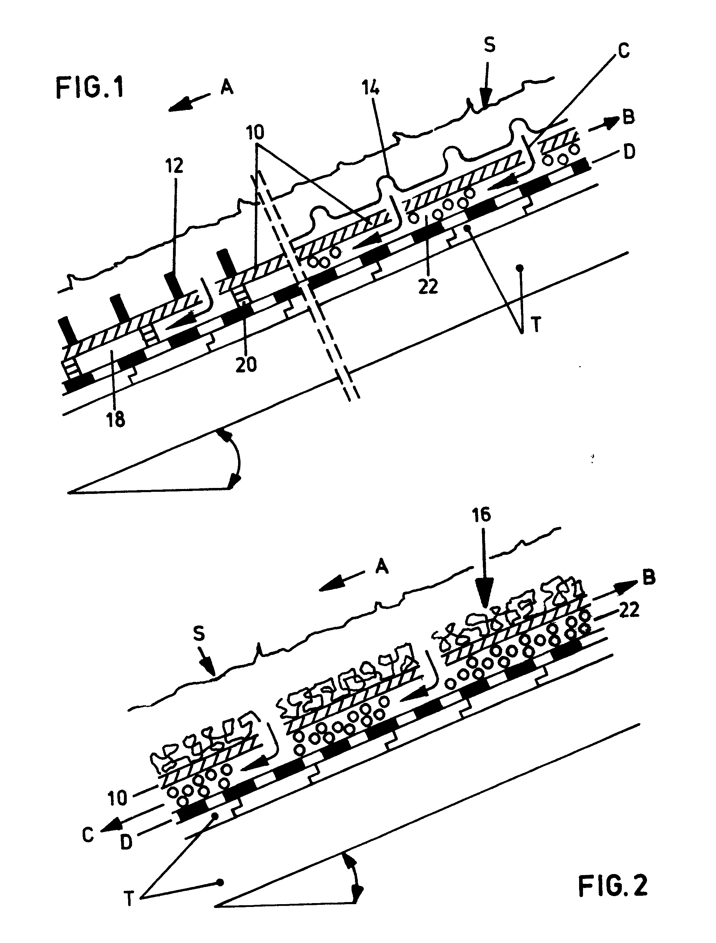

Gemäss Fig. 1 besitzt eine auf einer Dachhaut D oberhalb einer Tragkonstruktion T aufliegende Dachabdeckung nach der vorliegenden Erfindung ein Schubableitungsmittel 10 in Form einer zugfesten Filtermatte, an der oberseitig in eine aufzubringende Schicht S vorstehende Haltevorsprünge 12 bzw. 14 befestigt sind. Während die Haltevorsprünge 12 beispielsweise Stifte, Rippen oder dergleichen sein können, handelt es sich bei den Haltevorsprüngen 14 um gewellte Elemente. Die aufzubringende Schicht S, wie eine Pflanzentragschicht, gelangt in die Zwischenräume zwischen den Haltevorsprüngen und wird von diesen an einem Abrutschen in Dachneigungsrichtung gehindert. Die in Pfeilrichtung A auftretenden Schubkräfte werden von den Haltevorsprüngen 12, 14 aufgefangen und auf die Filtermatte übertragen, die ihrerseits die Schubbelastung als Zugspannung zur Firstseite ableitet. Das Schubableitungsmittel 10 ist firstseitig gehalten, so dass sich die in Pfeilrichtung A auftretenden Schubkräfte und die in Pfeilrichtung B auftretenden Zugkräfte aufheben.

Unterhalb der wasserdurchlässigen Filtermatte des Schubableitungsmittels 10 befindet sich eine Dränage. Im linken Bereich von Fig. 1 ist die Dränage 18 so ausgebildet, dass die Filtermatte durch perforierte Abstandshalter 20 an einem satten Aufliegen auf der Dachhaut D gehindert wird. Dadurch kann das aus der Schicht S durch die Filtermatte nach unten abfliessende Wasser in Pfeilrichtung C abströmen. Im rechten Bereich von Fig. 1 ist lediglich dargestellt, dass eine Dränage 22 auch aus vorgefertigten handelsüblichen Dränplatten oder dergleichen bestehen kann.

In Fig. 2 ist dargestellt, dass die auf der Dachhaut D oberhalb der Tragkonstruktion T des Daches aufliegende Dachabdeckung nach der vorliegenden Erfindung ebenfalls ein Schubableitungsmittel 10 in Form einer zugfesten Filtermatte aufweist, die die in Pfeilrichtung A auftretenden Schubkräfte durch eine in Pfeilrichtung B wirkende Zughalterung auffängt. Bei der Ausführungsform aus Fig. 2 liegt die Filtermatte 10 auf einer Dränage 22 aus vorgefertigten, handelsüblichen Dränplatten oberhalb der Dachhaut D auf. Als Haltevorsprünge besitzt die Filtermatte ein oberseitiges dreidimensionales Gebilde 16 aus miteinander verketteten und zumindest bereichsweise mit der Filtermatte verbundenen Fasern oder Strängen. Diese können sich in vollständig unregelmässiger Form erstrecken und ermöglichen es, dass die Bestandteile der aufzubringenden Schicht S in die Zwischenräume des dreidimensionalen Gebildes gelangen, wodurch eine wurzelartige Verankerung zwischen der Schicht S und den verketteten Fasern oder Strängen auftritt. Diese sorgen dafür, dass die aufzubringende Schicht S an einem Abrutschen in Dachneigungsrichtung gehindert und die Schubkräfte in Pfeilrichtung A durch Zugkräfte in Pfeilrichtung B aufgefangen werden. Das aus der Schicht S abzuführende Wasser kann nach Filterung durch die Filtermatte in der Dränage 22 abfliessen.

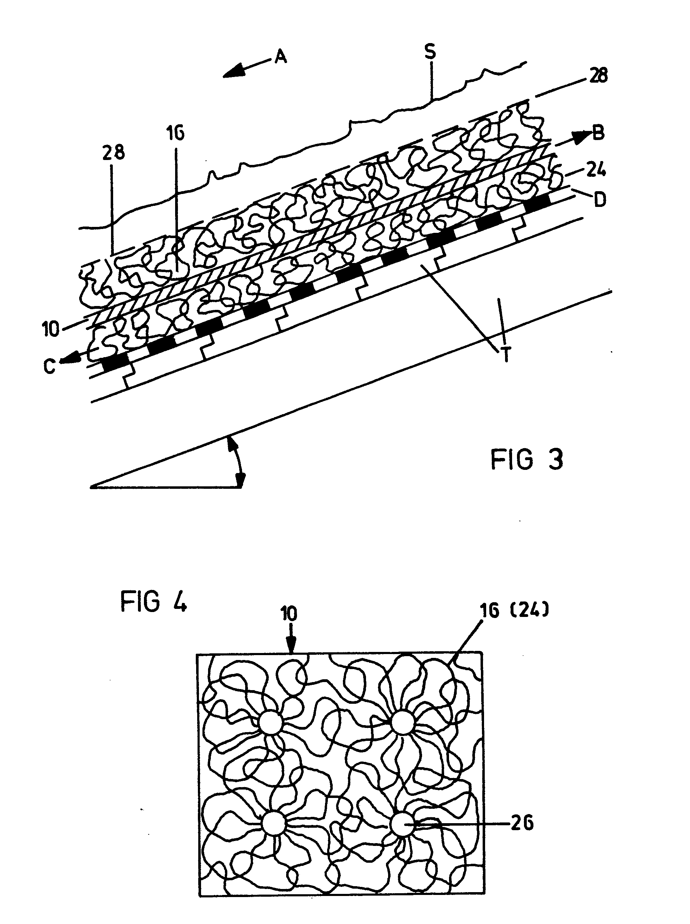

Die Ausführungsform aus Fig. 3 ist gegenüber derjenigen aus Fig. 2 lediglich in zwei Punkten abgewandelt. Einerseits befindet sich in dem dreidimensionalen, schubauffangenden Gebilde 16 aus miteinander verketteten Fasern oder Strängen eine gitterförmige Armierung 28 unter Abstand oberhalb der Filtermatte des Schubableitungsmittels 10. Dieses beispielsweise mit einem Rastermass von 10 cm ausgebildete Armierungsgitter sorgt dafür, dass auch im Falle grösserer Dicken der aufzubringenden Schicht S und damit grösser Dicken des dreidimensionalen schubauffangenden Gebildes 16 dessen äussere Faser- oder Strangbereiche ausreichend stabil sind, das heisst durch die auftretenden Schubkräfte nicht in Dachneigungsrichtung zu weit verlagert werden. Ausserdem unterscheidet sich die Ausführungsform aus Fig. 3 von derjenigen aus Fig. 2 dadurch, dass die Dränage 24 ähnlich wie das oberseitige Gebilde 16 aufgebaut ist, das heisst aus dreidimensional miteinander verketteten Fasern oder Strängen besteht. Diese gewährleisten auch bei einer geringen Schichtdicke der Dränage 24 ausreichende Dräneigenschaften, und zwar wegen der grossen Zwischenräume des verketteten Gebildes. Wenn es erwünscht ist, kann auch im unteren Bereich der Dränage 24 eine der Armierung 28 entsprechende Stabilisierung vorgesehen werden.

Fig. 4 zeigt eine mögliche Ausführungsform für die dreidimensional verketteten Fasern oder Stränge des oberseitigen schubauffangenden Gebildes 16 und/oder der Dränage 24. Die nicht näher bezeichneten Fasern oder Stränge können dreidimensional gewebt, geflochten, oder auch in anderer Weise, wie völlig unregelmässig, miteinander verkettet sein. Gemäss Fig. 4 kann das verkettete Raumgebilde an Teilbereichen 26 fest mit einem Schubableitungsmittel 10 in Form einer zugfesten Matte oder dergleichen verbunden sein. Dabei können den einzelnen Teilbereichen 26 einzelne Faserbüschel zugeordnet sein, die untereinander und gegebenenfalls auch mit angrenzenden Faserbüscheln verkettet sind. Die Fasern oder Stränge können aus unterschiedlichen, unverrottbaren Materialien, beispielsweise aus Kunststoff-Monofilen, bestehen.

Im Zusammenhang mit den dargestellten Ausführungsformen ist darauf hinzuweisen, dass diese lediglich beispielhaft sind und in vielfältiger Weise abgewandelt sowie den jeweiligen Bedürfnissen angepasst werden können. Wichtig ist dabei, dass der in Pfeilrichtung A auftretende und durch die Dachabdeckung mit der aufzubringenden Schicht S begründete Schub unabhängig von der Dachhaut D in Pfeilrichtung B firstseitig abgetragen wird. Gegebenenfalls muss durch eine gesonderte Gleitschicht zwischen der Dachabdeckung und der Dachhaut dafür gesorgt werden, dass eine Reibung zwischen diesen Teilen zumindest weitgehend vermieden wird. Sofern die aufzubringende Schicht bereits selbst eine ausreichende Dräneigenschaft hat, kann gegebenenfalls auf eine unterseitige Dränage verzichtet werden, so dass in diesem Falle bei den Ausführungsformen aus den Fig. 1 bis 3 die zugfeste Matte des Schubableitungsmittels, die in diesem Falle keine Filterungseigenschaften haben muss, direkt oder über eine Gleitschicht auf der Dachhaut D zu liegen kommen kann.

**Patentansprüche**

1. Schrägdachabdeckung zum Begrünen eines mit einer Tragkonstruktion (T) und einer wasserundurchlässigen Dachhaut (D) als Kalt- oder Warmdach ausgebildeten Schrägdaches mit einer oberseitig aufzubringenden Schicht (S), wie einer Pflanzentragschicht, und mit einem von der Dachhaut (D) unabhängigen, verrottungsfreien Haltegebilde, das in die aufzubringende Schicht (S) reibungserhöhend sowie schubauffangend eingreifende oberseitige Haltevorsprünge (12, 14, 16) an einem zum Abtragen des auftretenden Schubes am Schrägdach gegen Abrutschen gesicherten Schubableitungsmittel (10) aufweist und das über verteilte, eine unterseitige Dränage (18, 22, 24) bestimmende Abstandshalter auf das Schrägdach aufzubringen ist, dadurch gekennzeichnet, dass das auf das Schrägdach verankerungsfrei lose sowie weitgehend spannungs- bzw. reibungsfrei aufgelegte Haltegebilde als Schubableitungsmittel (10) eine den Schub über Zugkräfte abtragende und lediglich am Dachfirst festzulegende zugfeste Matte mit oberseitigen Haltevorsprüngen aufweist, die gleichzeitig als eine die Dränage (18, 22, 24) oberseitig grossflächig begrenzende Filtermatte ausgebildet ist.

2. Dachabdeckung nach Anspruch 1, dadurch gekennzeichnet, dass die Haltevorsprünge (12, 14) als einzelne, direkt oder über Zwischenglieder mit der Filtermatte verbundene schubauffangende Glieder, wie Noppen, Stifte, Haken oder an sich bekannte Stege, Rippen, gewellte Elemente oder dergleichen, ausgebildet sind.

3. Dachabdeckung nach Anspruch 1, dadurch gekennzeichnet, dass die Haltevorsprünge in ihrer Gesamtheit als ein zumindest bereichsweise mit dem Schubableitungsmittel (10) verbundenes, dreidimensionales, schubauffangendes Gebilde (16) aus miteinander verketteten Fasern oder Strängen mit zwischen diesen befindlichen Zwischenräumen zum Aufnehmen wenigstens des unteren Bereichs der aufzubringenden Schicht (S) ausgebildet sind.

4. Dachabdeckung nach Anspruch 3, dadurch gekennzeichnet, dass das dreidimensionale Gebilde (16) aus Kunststoff-Monofilen besteht.

5. Dachabdeckung nach Anspruch 3 oder 4, gekennzeichnet durch ein schubauffangendes Gebilde (16) mit einem dreidimensionalen Geflecht oder Gewebe von Fasern oder Strängen.

6. Dachabdeckung nach Anspruch 3 oder 4, gekennzeichnet durch ein schubauffangendes Gebilde (16) mit einer unregelmässigen Verkettung von Fasern oder Strängen.

7. Dachabdeckung nach einem oder mehreren der Ansprüche 1 bis 6, gekennzeichnet durch eine die verketteten Fasern oder Stränge lagestabilisierende Armierung, wie ein Gitter, im Inneren und/oder an der Oberseite des schubauffangenden Gebildes (16).

8. Dachabdeckung nach einem oder mehreren der Ansprüche 1 bis 7, dadurch gekennzeichnet, dass die Filtermatte aus mit den verketteten Fasern oder Strängen des dreidimensionalen schubauffangenden Gebildes (16) verbundenen, wie verflochtenen oder verklebten, zugfesten Zugsträngen besteht.

9. Dachabdeckung nach einem oder mehreren der Ansprüche 1 bis 8, gekennzeichnet durch Mittel zum abrutschsichernden Anschliessen des Schubableitungsmittels (10) an der Firstseite des Schrägdaches.

10. Dachabdeckung nach einem oder mehreren der Ansprüche 1 bis 9, gekennzeichnet durch eine über beide Hälften eines Satteldachs durchgehend zu verlegende zugfeste Matte eines durch Gewichtsausgleich über First auf dem Schrägdach gehaltenen Schubableitungsmittels (10).

11. Dachabdeckung nach einem oder mehreren der Ansprüche 1 bis 10, dadurch gekennzeichnet, dass die verteilten Abstandshalter (20) an der Filtermatte angeordnet sind.

12. Dachabdeckung nach Anspruch 11, dadurch gekennzeichnet, dass die zugfeste Filtermatte als Schubableitungsmittel (10) mit ober- und unterseitigen, zumindest bereichsweise an die Filtermatte angeschlossenen, dreidimensionalen Gebilden (16, 24) aus miteinander verketteten Fasern oder Strängen mit zwischen diesen befindlichen Zwischenräumen ausgebildet ist, die oberseitig zum Aufnehmen der aufzubringenden Schicht (S) und unterseitig zum Aufnehmen von abzuleitendem, gefiltertem Oberflächenwasser und/oder von Flutungswasser zum Bewässern von unten dienen.

13. Dachabdeckung nach Anspruch 12, gekennzeichnet durch eine die Fasern oder Stränge lagestabilisierende Armierung (28), wie ein Gitter, oberhalb und/oder unterhalb der Filtermatte (10).

14. Dachabdeckung nach einem oder mehreren der Ansprüche 1 bis 13, gekennzeichnet durch eine Dränage (18, 22, 24) mit einer ausreichenden Rückstaubildung und/oder mit verteilt eingearbeiteten, von der Dränageunterseite zur Dränageoberseite führenden Wasserleitgebilden zum unterseitigen Bewässern der oberseitig aufzubringenden Schicht (S) mittels firstseitig in die Dränage eingeleiteten Flutungswassers.

15. Dachabdeckung nach einem oder mehreren der Ansprüche 1 bis 14, gekennzeichnet durch eine zugfeste Filtermatte mit feuchtigkeitsspeichernden Eigenschaften.

16. Dachabdeckung nach einem oder mehreren der Ansprüche 1 bis 15, gekennzeichnet durch eine Wärmedämmschicht unter dem Haltegebilde oberhalb der Dachhaut (D).

17. Dachabdeckung nach einem oder mehreren der Ansprüche 1 bis 16, gekennzeichnet durch eine Gleitschicht unter dem Haltegebilde und/oder einer Wärmedämmschicht oberhalb der Dachhaut (D).

18. Dachabdeckung nach einem oder mehreren der Ansprüche 1 bis 17, gekennzeichnet durch einen Randabschluss des Haltegebildes.

19. Dachabdeckung nach Anspruch 18, dadurch gekennzeichnet, dass der Randabschluss als den Rand des Haltegebildes umfassendes U-Profil ausgebildet ist.

20. Dachabdeckung nach einem oder mehreren der Ansprüche 1 bis 19, dadurch gekennzeichnet, dass die Dränage unter dem Haltegebilde als Abstandshalter ein Wellelement aufweist, dessen Wellentäler in Dachneigungsrichtung oder schräg hierzu verlaufen.

## Claims

1. A sloping roof covering for cultivating a sloping roof, which is designed as a roof with or without insulation with a supporting structure (T) and a water-tight roof skin (D) comprising a layer (S) such as a plant-carrying layer which is to be applied to the upper side, and comprising a rot-proof holding structure which is independent of the roof skin (D) and which has, meshing into the layer (S) to be applied, friction-increasing and thrust-absorbing upper holding projections (12, 14, 16) on a thrust-dissipating means (10) secured on the sloping roof against slipping down for carrying off the thrust occurring, and which holding structure is to be applied on to the sloping roof by means of distributed spacer members which determine underside drainage means (18, 22, 24), characterised in that the holding structure which is placed removably without anchorage and in a substantially tension-free and friction-free manner on to the sloping roof has, as thrust-dissipating means (19), an extension-resistant mat which carries off the thrust via tensile forces and is to be set merely on the ridge of the roof, the mat simultaneously being designed as a filter mat which defines the drainage means (18, 22, 24) over a large area on the upper side.

2. A roof covering according to claim 1, characterised in that the holding projections (12, 14) are designed as individual thrust-absorbing members such as burls, pins, hooks or known webs, ribs, corrugated elements or the like which are connected to the filter mat directly or via intermediate members.

3. A roof covering according a claim 1, characterised in that teh holding projections are designed in their entirety as a three-dimensional thrust-absorbing structure (16) of interlinked fibres of strands, with intermediate spaces between them for receiving at least the lower region of the layer (S) to be applied, the structure (16) being connected at leat in some regions to the thrust-dissipating means (10).

4. A roof covering according to claim 3, characterised in that the three-dimensional structure (16) is composed of plastics monofilaments.

5. A roof covering according to claim 3 or 4, characterised by a thrust-absorbing structure (16) comprising three-dimensionally plaited or woven fibres or strands.

6. A roof covering according to claim 3 or 4, characterised by a thrust-absorbing structure (16) with an irregular interlinking of fibres or strands.

7. A roof covering according to one or more of claims 1 to 6, characterised by armouring such as a grid which positionally stabilizes the interlinked fibres or strands, in the interior or on the upper side of the thrust-absorbing structure (16).

8. A roof covering according to one or more of claims 1 to 7, characterised in that the filter mat is composed of extension-resistant pulling strands connected to the interlinked fibres or strands of the three-dimensional thrust-absorbing structure (16).

9. A roof covering according to one or more of claims 1 to 8, characterised by means for attaching the thrust-dissipating means (10) on the ridge side of the sloping roof in slip-preventing manner.

10. A roof covering according to one or more of claims 1 to 9, characterised by an extension-resistant mat of a thrust-dissipating means (10) which is to be lain continuously over both halves of a saddle-back roof, the mat being held on the sloping roof by a counterweighting means over the ridge.

11. A roof covering according to one or more of claims 1 to 10, characterised in that the distributed spacer members (20) are arranged on the filter mat.

12. A roof covering according to claim 11, characterised in that the extension-resistant filter mat is designed a thrust-dissipating means (10) with three-dimensional structures (16, 24) of interlinked fibres or strands with intermediate spaces between them attached at least in some regions to the filter mat on the upper side and under side, the intermediate spaces serving on the upper side to receive the layer (S) to be applied and on the under side to receive filtered surface water which is to be carried off and/or to receive flowing water for watering from below.

13. A roof covering according to claim 12, characterised by armouring (28) such as a grid which positionally stabilizes the fibres or strands, above and/or below the filter mat (10).

14. A roof covering according to one or more of claims 1 to 13, characterised by a drainage means (18, 22, 24) with sufficient damming and/or water conduits which are incorporated in a distributed manner and lead from the unter side of the drainage means to the upper side of the drainage means for watering on the unter side the layer (S) to be applied to the upper side using flowing water introduced into the drainage means on the ridge side.

15. A roof covering according to one or more of claims 1 to 14, characterised by an extension-resistant filter mat with moisture-retaining properties.

16. A roof covering according to one or more of claims 1 to 15, characterised by a heat insulation layer below the holding structure above the roof skin (D).

17. A roof covering according to one or more of claims 1 to 16, characterised by an anti-friction layer below the holding structure and/or a heat insulation layer above the roof skin (D).

18. A roof covering according to one or more of claims 1 to 17, characterised by an end seal of the holding structure.

19. A roof covering according to claim 18, characterised in that the end seal is designed as a U-profile surrounding the end of the holding structure.

20. A roof covering according to one or more of claims 1 to 19, characterised in that under the holding structure the drainage means has a spacer member a corrugated element of which the troughs run in the direction of the roof slope or obliquely thereto.

**Revendications**

1. Couverture de toit en pente pour gazonner un toit en pente sous forme d'une toiture froide ou chaude muni d'une charpente (T) et d'une couche d'arrêt imperméable à l'eau (D), comprenant une couche à appliquer (S) du côté supérieur, telle qu'une couche support de plantes, et comprenant une structure de retenue imputrescible indépendante de la couche d'arrêt (D), présentant, sur un élément de dérivation de poussée (10) fixé au toit en pente de façon à ne pas glisser pour amortir la poussée qui se produit, des saillies de retenue supérieures (12, 14, 16) pénétrant dans la couche à appliquer (S) de façon à accroître l'adhérence et à absorber la poussée et qui s'applique sur des entretoises réparties définissant un drainage inférieur (18, 22, 24), caractérisée en ce que la structure de retenue reposant librement sans ancrage, dans une large mesure sans tension ni frottement, sur le toit en pente comporte comme élément de dérivation de poussée (10) une natte résistant à la traction amortissant la poussée par des forces de traction et se fixant seulement au faîte, munie de saillies de retenues supérieures, formée en même temps comme une natte de filtrage délimitant le drainage (18, 22, 24) du côté supérieur par une surface grossère,

2. Couverture de toit selon la revendication 1, caractérisée en ce que les saillies de retenue (12, 14) sont réalisées sous forme d'éléments absorbant la poussée liés à la natte filtrante directement ou par des éléments intermédiaires, comme des boutons, des tiges, des crochets ou bien des traverses, nervures, éléments ondulés ou similaires connus en soi.

3. Couverture de toit selon la revendication 1, caractérisée en ce que les saillies de retenue sont réalisées dans leur ensemble sous forme d'une structure tridimensionnelle absorbant la poussée (16), liée au moins par endroit à l'élément de dérivation de poussée (10), formée par des fibres ou fils mutuellement enchaînés entre lesquels se trouvent des espaces intermédiaires pour recevoir au moins la partie inférieure de la couche à appliquer (S).

4. Couverture de toit selon la revendication 3, caractérisée en ce que la structure tridimensionnelle (16) est constituée par des monofilaments de matière plastique.

5. Couverture de toit selon l'une des revendications 3 et 4, caractérisée par une structure absorbant la poussée (16) comportant un treillis ou tissu tridimensionnel de fibres ou de fils.

6. Couverture de toit selon l'une des revendications 3 et 4, caractérisé par une structure absorbant la poussée (16) comportant un enchaînement irrégulier de fibres ou de fils.

7. Couverture de toit selon une ou plusieurs des revendications 1 à 6, caractérisée par une armature stabilisant en position les fibres ou fils enchaînés, telle qu'une grille, à l'intérieur et/ou à la surface supérieure de la structure absorbant la poussée (16).

8. Couverture de toit selon une ou plusieurs des revendications 1 à 7, caractérisée en ce que la natte filtrante est constituée par des fils de traction résistant à la traction, liés, par exemple entrelacés ou collés, avec les fibres ou fils enchaînés de la structure tridimensionnelle absorbant la poussée (16).

9. Couverture de toit selon un ou plusieurs des revendications 1 à 8, caractérisée par des moyens pour protéger contre le glissement la jonction de l'élément de dérivation de poussée (10) au faîte du toit en pente.

10. Couverture de toit selon une ou plusieurs des revendications 1 à 9, caractérisée par une natte résistant à la traction, se plaçant en continu sur les deux moitiés d'un toit à deux versants, d'un élément de dérivation de poussée (10) maintenu par équilibre de poids sur le toit en pente, au-dessus du faîte.

11. Couverture de toit selon une ou plusieurs des revendications 1 à 10, caractérisée en ce que les entretoises réparties (10) sont disposées sur la natte filtrante.

12. Couverture de toit selon la revendication 11, caractérisée en ce que la natte filtrante résistant à la traction est réalisée sous forme d'un élément de dérivation de poussée (10) muni sur ses faces supérieure et inférieure de structures tridimensionnelles (16, 24) liées au moins par endroits à la natte filtrante, formées de fibres ou de fils mutuellement enchaînés entre lesquels se trouvent des espaces intermédiaires qui servent du côté supérieur à recevoir la couche à appliquer (S) et du côté inférieur à recevoir de l'eau de surface filtrée à évacuer et/ou de l'eau d'adduction pour l'arrosage par dessous.

13. Couverture de toit selon la revendication 12, caractérisée par une armature (28) stabilisant en position les fibres ou fils, telle qu'une grille, au-dessus et/ou au-dessous de la natte filtrante (10).

14. Couverture de toit selon une ou plusieurs des revendications 1 à 13, caractérisée par une drainage (18, 22, 24) comportant une formation de retenue suffisante et/ou des structures de canalisations d'eau incorporées réparties, conduisant du côté inférieur au côté supérieur du drainage pour l'arrosage par le côté inférieur de la couche à appliquer du côté supérieur (S) au moyen d'eau d'adduction introduite dans le drainage du côté du faîte.

15. Couverture de toit selon une ou plusieurs des revendications 1 à 14, caractérisée par une natte filtrante résistant à la traction présentant des propriétés d'emmagasinage l'humidité.

16. Couverture de toit selon une ou plusieurs des revendications 1 à 15, caractérisée par une couche thermiquement isolante sous la structure de retenue au-dessus de la couche d'arrêt (D).

17. Couverture de toit selon une ou plusieurs des revendications 1 à 16, caractérisée par une couche de glissement sous la structure de retenue et/ou sous une couche thermiquement isolante au-dessus de la couche d'arrêt (D).

18. Couverture de toit selon une ou plusieurs des revendications 1 à 17, caractérisée par un arrêt en bordure de la structure de retenue.

19. Couverture de toit selon ls revendication 18, caractérisée en ce que l'arrêt en cordure est réalisé sous forme d'un profil en U entourant le bord de la structure de retenue.

20. Couverture de toit selon une ou plusieurs des revendications 1 à 19, caractérisée en ce que le drainage comporte comme entretoise sous la structure de retenue un élément ondulé dont les fonds d'ondulations s'étendent dans la direction de la pente du toit ou obliquement par rapport à celle-ci.

FIG.1

FIG.2

FIG 3

FIG 4